# EUROPEAN PATENT APPLICATION

(11) **EP 1 939 717 A1**
(43) Date of publication of application: **02.07.2008**
(21) Application number: 06797442.8
(22) Date of filing: 05.09.2006
(51) Int. Cl.: G06F 3/048, G06F 17/30, G09G 5/00

(54) **DISPLAY AND RECORDING MEDIUM WHERE DISPLAY PROGRAM IS RECORDED**

(30) Priority: 30.09.2005 JP 2005287546
(71) Applicant: Brother Kogyo Kabushiki Kaisha, Nagoya-shi, Aichi 467-8561 (JP)
(72) Inventor: FUJII, Norihisa, Nagoya-shi Aichi 467-8562 (JP)
(74) Representative: Smith, Samuel Leonard
(86) International application number: PCT/JP2006/317536
(87) International publication number: WO 2007/040011

(57) **Abstract**

A display device allows a user to move displayed pages as the user actually reads a paper book. The display device includes an n-page forwarder for moving a displayed page forward by n pages (n is an arbitrary integer equal to or larger than 3), a one-page forwarder for moving a displayed page forward by one page, and a page backwarder for moving a displayed page backward either by (n/2) pages if "*n*" is an even number, or by {(*n*-1)/2} pages if "*n*" is an odd number.

## Description

### Technical Field

The present invention relates to a display device for displaying data on a page basis and switching displays by the page. The present invention also relates to a recording medium for storing a display program.

### Background Art

A conventional display device displays a text file containing a plurality of pages on a page basis, such as an electronic book. Such a display device displays only one page at a time. The display device, therefore, switches one page displayed thereon to another.

Patent Reference 1 discloses a scroll display device capable of scrolling a text to be displayed thereon line by line. This scroll display device includes scrolling means for scrolling down one line, scrolling means for scrolling up one line, scrolling means for scrolling down eight lines, scrolling means for scrolling up eight lines, scrolling means for scrolling down a preset number of lines, and scrolling for scrolling up a preset number of lines up.
[Patent Reference 1] Japanese Patent Application Publication No. 2001-60135

### Disclosure of Invention

### Technical Problem

When a person reads or consults an actual paper book (for example, when searching a telephone book for a telephone number, or a dictionary for a word), the person has to know the order of the information arranged in the book. Therefore, the person turns the pages of the book, guessing which page includes the intended. Suppose that the person searches an English-Japanese dictionary for a word. Since words are arranged in the alphabetical order, the person turns the pages of the dictionary either forward or backward, guessing how many pages are left up to the page that contains the intended word from the present page.

In order to find the intended page, the person starts with turning the pages roughly. Since the person merely has a rough idea as to where the intended page is, the person often overshoots the intended page. When finding overshoot of the intended page, the person turns backward by a few pages. When the person has overshot the intended page backward again, the person approaches the intended page by turning a few pages further forward.

However, the conventional display device has not realized such human behaviors on turning pages.

The present invention is made in order to resolve the above problem, and it is an object of the present invention to provide a display device capable of moving displayed pages in accordance with actual human behaviors on reading a paper book.

### Technical Solution

In order to achieve the above object, a display device according to claim 1 has a display panel to display data on a page basis and capable of switching a displayed page to another by the page. The display device is configured of an *n-*page forwarder capable of moving a page displayed on a display panel forward by n pages (n is an integer equal to or larger than 3) when operated by a user, a one-page forwarder capable of moving the page displayed forward by one page when operated by a user, and a page backwarder capable of moving a page displayed backward either by (*n*/2) pages if n is an even number, or by {(*n*-1)/2} pages if *n* is an odd number, when operated by a user.

A display device according to claim 2 has a display panel to display data on a page basis and capable of switching a displayed page to another by the page. The display device is configured of at least two page forwarders capable of moving a page displayed on the display panel forward by a preset number of pages when operated by a user, and at least one page backwarder capable of moving a page displayed on the display panel backward by a preset number of pages when operated by a user. Further, at least one of the page backwarders described above is an intermediate-page backwarder whose preset number of pages is different from either numbers preset in the page forwarders, and at least one of the page forwarders described above is a large-page forwarder whose preset number of pages is equal to or larger than the number of pages preset in the intermediate-page backwarder, and at least one of the page forwarders is a small-page forwarder whose preset number of pages is equal to or smaller than the number of pages preset in the intermediate-page backwarder.

A display device according to claim 3 is the display device according to claim 2, characterized in that the number of pages set in the intermediate-page backwarder described above is equal to or smaller than a number obtained by adding the number of pages set in the large-page forwarder described above and the number of pages set in the small-page forwarder described above and then dividing by two.

A display device according to claim 4 is the display device according to claim 3, characterized in that the n page set in the large-page forwarder described above is an integer equal to or larger than 3, and one page is set in the small-page forwarder described above, and either (n/2) pages if n is an even number, or {(*n*-1)/2} pages if n is an odd number, is set in the intermediate-page backwarder described above.

A display device according to claim 5 is the display device according to any one of claims 2 though 4, wherein the number of the page backwarders described above is smaller than the number of the page forwarders described above.

A display device according to claim 6 is the display device according to claim 5, wherein the number of the page forwarders described above is two, whereas the number of the page backwarders described above is one.

A display device according to claim 7 is the display device according to any one of claims 1 through 6, wherein the display panel described above displays images on an electrophoretic display medium configured of a first and a second substrates disposed in opposition to each other and a dispersion medium with dispersed charged particles interposed therebetween.

A recording medium according to claim 8 stores a display program for the computer of the display device capable of displaying data and switching a displayed page to another on a page basis. The display program contains an *n*-page forwarder for moving a page displayed on a display panel forward by n pages (n is an integer equal to or larger than 3) when operated by a user, a one-page forwarder for moving a page displayed forward by one page when operated by a user, and a page backwarder for moving a page displayed backward either by *(n*/2*)* pages if n is an even number, or by {(*n*-1)/2} pages if n is an odd number, when operated by a user.

A recording medium according to claim 9 stores a display program for the computer of the display device capable of displaying data and switching a displayed page to another on a page basis. The display program includes at least two page forwarders for moving a page displayed forward by a preset number of pages when operated by a user and at least one page backwarder for moving a page displayed backward by a preset number of pages when operated by a user. Further, at least one of the page backwarders described above is an intermediate-page backwarder whose preset number of pages is different from either numbers set in the page forwarders, at least one of the page forwarders described above is a large-page forwarder whose preset number of pages is equal to or larger than the number of pages set in the intermediate-page backwarder, and at least one of the page forwarders described above is a small-page forwarder whose preset number of pages is equal to or smaller than the number of pages set in the intermediate-page backwarder.

### Advantageous Effects

The display device according to claim 1 includes an n-page forwarder, a page backwarder, and a one-page forwarder, thereby allowing a user to turn pages as a user actually reads a paper book.

Further, the display device according to claim 2 includes a large-page forwarder, an intermediate-page backwarder, and a small-page forwarder, thereby allowing a user to turn pages as the user actually reads a paper book.

The display device according to claim 3 allows a user to find the intended page more easily, in addition to the effect produced by the display device according to claim 2.

The display device according to claim 4 allows a user to find the intended page more easily, in addition to the effect produced by the display device according to claim 3.

According to the display device disclosed in claim 5, in addition to the effects produced by the display device according to any one of claims 2 though 4, as the number of the page backwarders is smaller than the number of the page forwarders, the display device can be downsized.

According to the display device disclosed in claim 6, in addition to the effect produced by the display device according to claim 5, the downsizing of the display device can be realized as smallest as possible.

The display device according to claim 7 allows data to be displayed on an electrophoretic display medium, in addition to the effects produced by the display device according to any one of claims 1 through 6.

The recording medium according to claim 8, which stores a display program having an n-page forwarder, a page backwarder, and a one-page forwarder, enables a user to turn pages as a human being actually reads a paper book.

The recording medium according to claim 9, which stores a display program having a large-page forwarder, an intermediate-page backwarder, and a small-page forwarder, allows a user to turn pages as the user actually reads a paper book.

### Brief Description of Drawings

FIG. 1 is a perspective view showing the appearance of a display device 100 according to one embodiment of the present invention.
FIG. 2 is a block diagram of the display medium 100 according to one embodiment of the present invention.
FIG. 3 is a flowchart explaining the operations of a CPU 30 according to one embodiment of the present invention.
FIG.4 is an explanatory diagram showing the operations of the display device 100 when a user wishes to find an intended page.
FIG. 5 is a comparative diagram to one embodiment of the present invention, explaining the operations of a display device equipped with a five-page skip key, a five-page back key, a one-page skip key, and a one-page back key, when a user wishes to find an intended page.

### Explanation of Reference

- 5: frame
- 10: display panel
- 15: display controller
- 20: key operation unit
- 21: two-page back key
- 22: one-page skip key
- 23: five-page skip key
- 25: key interface
- 30: CPU
- 40: ROM
- 41: program
- 50: RAM
- 51: display page number storage area
- 60: memory card
- 61: text data
- 65: memory card interface
- 70: power switch
- 80: slot
- 100: display device

### Best Mode for Carrying Out the Invention

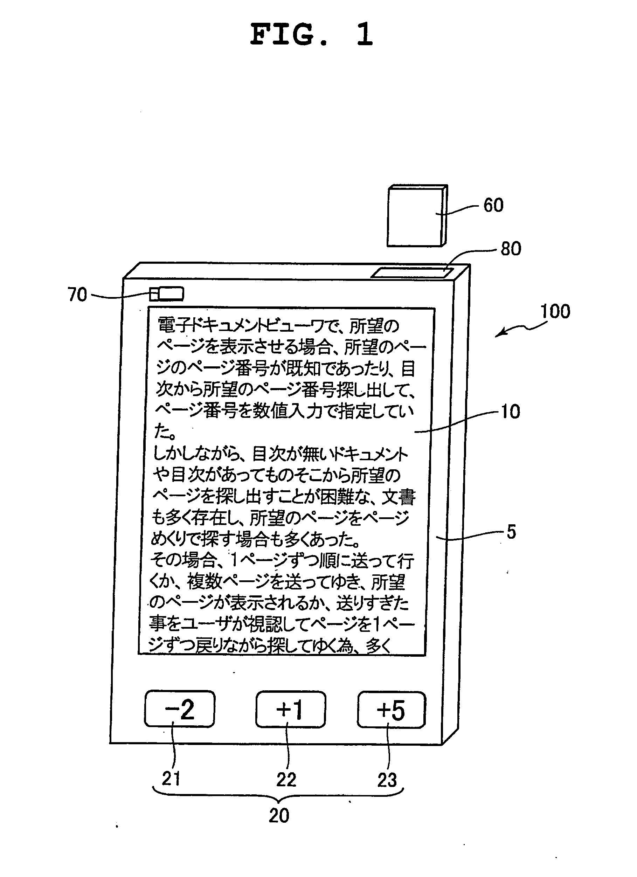

Hereinafter, preferred embodiments of the present invention will be described with reference to the accompanying drawings. FIG. 1 is a perspective view showing the appearance of a display device 100 according to the first embodiment of the present invention. As shown in FIG. 1, the display device 100 includes a display panel 10 for displaying text and/or an image thereon, a frame 5, a power switch 70, a slot 80, a two-page back key 21, a one-page skip key 22, and a five-page skip key 23.

The display panel 10 is configured of an electrophoretic display medium in which a display liquid with color-tinted charged particles dispersed therein is sealed between two glass substrates. In the display device 100, one surface of the paired glass substrates constituting the display panel 10 is exposed on the top face of the frame 5 and constitutes a display surface. An electrode (not shown) is provided on each of the glass substrates, and applying a voltage across the electrodes according to data types such as text data and various image data (to be described later) causes the charged particles in the display liquid to migrate. The charged particles having migrated to the display surface thus display images thereon. Since such an electrophoretic display medium has been well-known, as disclosed in Japanese Patent Application Publication No. 2004-13119, the description thereof is omitted here.

The frame 5 is a member surrounding the display panel 10, and has a power switch 70, a two-page back key 21, a one-page skip key 22, and a five-page skip key 23 on the top surface thereof.

The two-page back key 21, the one-page skip key 22, and the five-page skip key 23 are arranged on the lower side of the display panel 10 in the order of the two-page back key 21, the one-page skip key 22, and the five-page skip key 23 from the left.

The two-page back key 21 is a key for moving a page currently displayed backward by two pages. The one-page skip key 22 is a key for moving a currently displayed page forward by one page. The five-page skip key 23 is a key for moving a currently displayed page forward by five pages.

The power switch 70 is provided on the upper left side of the display panel 10. Sliding the power switch 70 starts to supply power to the display device 100.

As shown in FIG. 1, a slot 80 is provided on the right side of the upper side surface of the frame 5. The slot 80 is a slot for receiving a memory card 60 that stores a text data 61. The text data 61 is an electronic filing document containing data on the page basis.

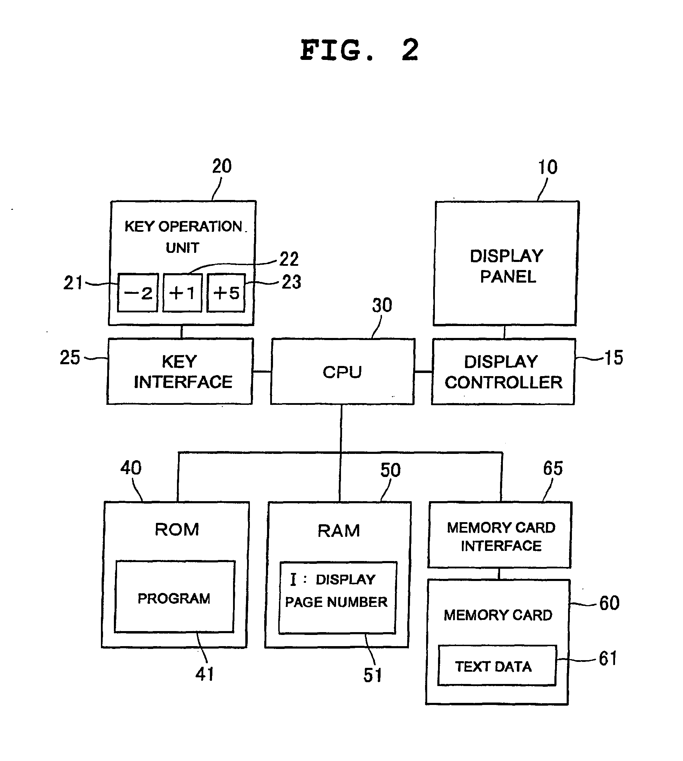

Next, the internal configuration of the display device 100 will be described with reference to a block diagram. FIG. 2 is a block diagram of the display device 100. As shown in FIG. 2, the display device 100 includes the display panel 10, a display controller 15, a key operation unit 20, a key interface 25, a CPU 30, a ROM 40, a RAM 50, and a memory card interface 65. Here, the two-page back key 21, the one-page skip key 22, and the five-page skip key 23 are collectively referred to as the key operation unit 20.

The ROM 40 stores a program 41 described later and is connected to the CPU 30. The RAM 50 includes a display page number storage area 51 for storing display page numbers described later, and is connected to the CPU 30. The memory card interface 65 is an interface for reading the text data 61 from the memory card 60 which has been inserted in the slot 80. The memory card interface 65 is connected to the CPU 30. The memory card 60 stores only one file of text data 61.

The key interface 25 is an interface for transmitting signals from the key operation unit 20 to the CPU 30. The key interface 25 is connected to the CPU 30.

The display controller 15 is connected to the CPU 30 to control the display panel 10 according to the instructions from the CPU 30.

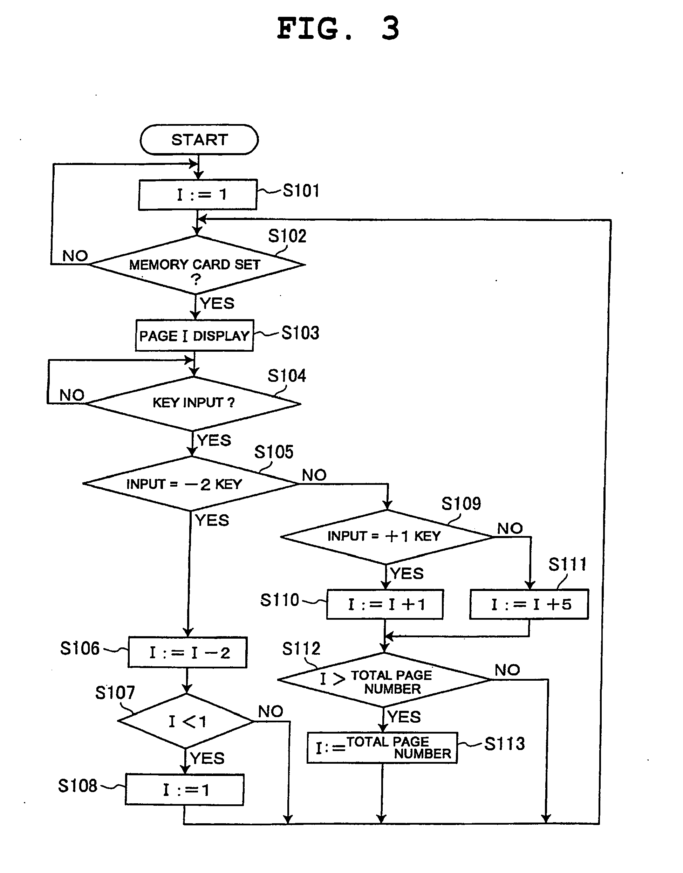

Next, the operation of the display device 100 will be described. FIG. 3 is a flowchart illustrating the process performed by the CPU 30 based on the program 41 stored in the ROM 40. Hereinafter, the operation of the display device 100 is described with reference to FIG. 3.

Supplying power to the display device 100 by operating the power switch 70 automatically starts the process. On the other hand, when the power switch 70 is slid to the other side, the display device 100 is turned off. Consequently, the power supply to the CPU 30 is ceased, terminating the process described later.

As the power is turned on, the CPU 30 starts processing and sets "1" as a variable I (S101). Here, the variable I indicates the page number of the electronic filing document displayed on the display panel 100. The value of the variable is stored in the display page number storage area 51 of the RAM 50.

Next, a determination is made as to whether or not the memory card 60 is inserted in the slot 80 (S102). If the memory card 60 is not inserted in the slot 80 (S102: NO), the process returns to S102 and waits until the memory card 60 is inserted.

If the memory card 60 is inserted in the slot 80 (S102: YES), the page I of the text data 61 stored in the memory card 60 is displayed on the display panel 10 (S103). Immediately after inserting the memory card 60 into the slot 80, the first page of data piece is displayed, since "1" is set as the variable I in S101.

Next, a judgment is made as to whether or not an input has been entered from the key operation unit 20 (S104). If no input has been entered from the key operation unit 20 (S104: NO), the process waits until an input is entered from the key operation unit 20.

When the input has been entered from the key operation unit 20 (S104: YES), a determination is made as to whether or not the input comes from the two-page back key 21 (S105).

If the input is from the two-page back key 21 (S105: YES), the value obtained by subtracting two from the present value of the variable I is set as the variable I (S106).

Next, a determination is made as to whether or not the variable I is smaller than "1" (S107). If the variable I is smaller than "1" (S107: YES), the value "1" is set as the variable I (S108). This is because the text data 61 has no page to be displayed before the first page. After that, the process returns to S102. If the memory card 60 is still inserted in the slot (S102: YES), the first page of the text data 61 is displayed in S103.

If the variable I is not smaller than "1" (S107: NO), the process returns to S102. If the memory card 60 is still in the slot (S102: YES), the page displayed is switched to the page located two-page behind.

If the two-page back key 21 is judged not to have been pressed in the key operation unit 20 in S105 (S105: NO), whether or not the one-page skip key 22 has been pressed in the key operation unit 20 is subsequently determined (S109).

If the input from the key operation unit 20 comes from the one-page skip key 22 (S109: YES), the value added one to the present value of the variable I is set as the variable I (S110). Next, whether or not the value of the variable I is larger than the total page number of the text data 61 (the last page number) is determined (S112).

If the value of the variable I is larger than the total page number of the text data 61 (S112: YES), the total page number of the text data 61 is set as the variable I (S113). This is because the text data 61 has no page to be displayed after the last page. After that, the process returns to S102. If the memory card 60 is still in the slot (S102: YES), the last page of the text data 61 is displayed in S103.

If the value of the variable I is not larger than the total page number of the text data 61 in S112 (S112: NO), the displayed page switches to the page located one-page ahead in S103.

Alternatively, if the input from the key operation unit 20 does not come from the one-page skip key 22 in S109 (109: NO), the value added five to the present value of the variable I is set as the variable I (S111). This is because NO in S109 means the input from the key operation unit 20 comes from the five-page skip key 23.

After that, the process moves on to S112. Likewise as described above, if the value of the variable I is larger than the total page number of the text data 61 (S112: YES), the last page of the text data 61 is displayed in S103. If the value of the variable I is not larger than the total page number of the text data 61 (S112: NO), the displayed page switches to the page located five-page ahead in S103.

The process returns to S101 if NO in S102 so that the first page is to be displayed in cases that the memory card 60 is removed halfway or another memory card 60 is inserted.

In the embodiment, the *n*-page forwarder according to claim 1 corresponds to the operation that the CPU 30 moves a page displayed on the display panel 10 forward by five pages as the five-page skip key 23 is depressed. The one-page forwarder according to claim 1 corresponds to the operation that the CPU 30 moves a displayed page forward by one page as the one-page skip key 22 is depressed. The backwarder according to claim 1 corresponds to the operation that the CPU 30 moves a displayed page backward by two pages as the two-page back key 21 is depressed.

Furthermore, in the embodiment, the large-page forwarder according to claim 2 corresponds to the operation that the CPU 30 moves a displayed page forward by five pages as the five-page skip key 23 is depressed. The small-page forwarder according to claim 2 corresponds to the operation that the CPU 30 moves a displayed page forward by one page as the one-page skip key 22 is depressed. The intermediate-page backwarder according to claim 2 corresponds to the operation that the CPU 30 moves a displayed page backward by two pages as the two-page back key 21 is depressed.

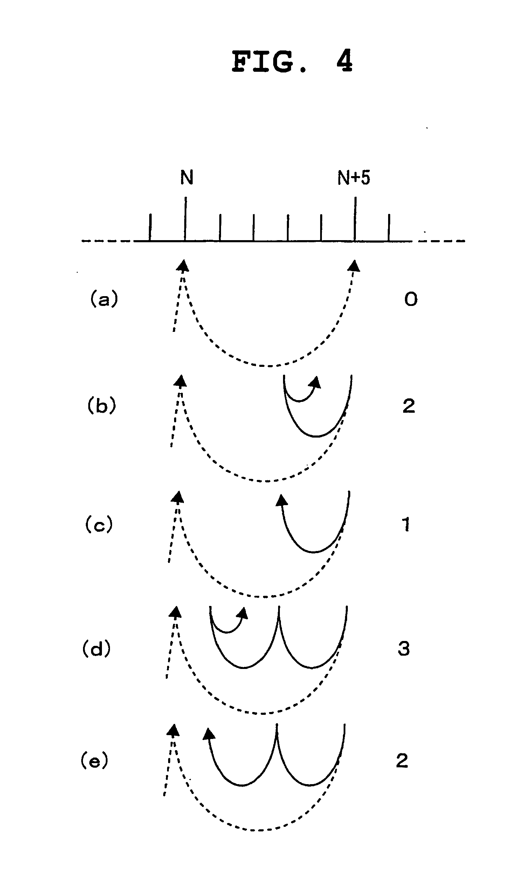

FIG. 4 is shows operations of the display device 100 so that a user finds the intended page in the text data 61. Here, suppose that the N-th page of the text data 61 is being displayed on the display device 100. The number "N" may be arbitrary.

FIG. 4(a) shows an operation in which an intended page is located N+5 pages ahead of the present page. FIG. 4(b) shows an operation in which an intended page is located N+4 pages ahead of the present page. FIG. 4(c) shows an operation in which an intended page is located N+3 pages ahead of the present page. FIG. 4(d) shows an operation in which an intended page is located N+2 pages ahead of the present page. FIG. 4(e) shows an operation in which an intended page is located N+1 pages ahead of the present page.

If the intended page is located N+5 pages ahead, depressing the five-page skip key 23 once enables the user to find the intended page.

If the intended page is located N+4 pages ahead, depressing the five-page skip key 23 once leads the user to the N+5-th page. When the user recognizes the intended page is located slightly behind the N+5-th page, the user then depresses the two-page back key 21 once to find the N+3-th page. Now that the use realizes the intended page is located slightly ahead of the N+3-th page, the user depresses the one-page skip key 22 once to reach the intended page.

If the intended page is located N+3 pages ahead, the user depresses the five-page skip key 23 once to find the N+5-th page. Since the intended page is behind the N+5-th page, the user depresses the two-page back key 21 once to reach the intended page.

If the intended page is located N+2 pages ahead, the user depresses the five-page skip key 23 once to open the N+5-th page. Since the intended page is behind the N+5-th page, the user depresses the two-page back key 21 once to reach the N+3-th page. Since the intended page is behind the N+3-th page, the user depresses the two-page back key 21 once again to reach the N+1-th page. Since the intended page is ahead of the N+1-th page, the user depresses the one-page skip key 22 once to reach the N+2-th page.

If the intended page is located N+1 pages ahead, the user depresses the five-page skip key 23 once to open the N+5-th page. Since the intended page is behind the N+5-th page, the user depresses the two-page back key 21 once to reach the N+3-th page. Since the intended page is behind the N+3-th page, the user depresses the two-page back key 21 once more to reach the intended page.

The display device 100, which thus includes the two-page back key 21, the one-page skip key 22, and the five-page skip key 23, allows a user to turn pages as the user actually reads a paper book.

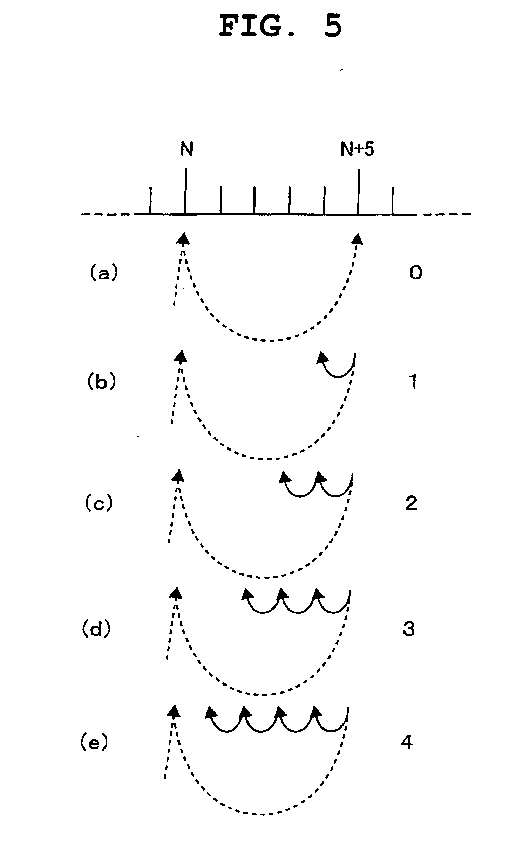

Next, as a comparative example, a display device which includes a five-page skip key, a five-page back key, a one-page skip key and a one-page back key will be described. In the display device, a user performs the following operations to reach the intended page. FIG. 5 shows the operations in this example.

FIG. 5(a) shows an operation in which an intended page is located N+5 pages ahead of the present page. FIG. 5(b) shows an operation in which an intended page is located N+4 pages ahead of the present page. FIG. 5 (c) shows an operation in which an intended page is located N+3 pages ahead of the present page. FIG. 5(d) shows an operation in which an intended page is located N+2 pages ahead of the present page.
FIG. 5(e) shows an operation in which an intended page is located N+1 pages ahead of the present page.

If the intended page is located N+5 pages ahead, depressing the five-page skip key once enables the user to find the intended page.

If the intended page is located N+4 pages ahead, depressing the five-page skip key 23 once leads the user to the N+5-th page. When the user recognizes the intended page is located slightly behind the N+5-th page, the user then depresses the one-page back key 21 once to find the intended page.

If the intended page is located N+3 pages ahead, the user depresses the five-page skip key 23 once to open the N+5-th page. Since the intended page is behind the N+5-th page, the user depresses the one-page back key 21 twice to reach the intended page.

If the intended page is located N+2 pages ahead, the user depresses the five-page skip key 23 once to open the N+5-th page. Since the intended page is behind the N+5 page, the user depresses the one-page back key three times to reach the intended page.

If the intended page is located N+1 pages ahead, the user depresses the five-page skip key 23 once to open the N+5-th page. Since the intended page is behind the N+5-th page, the user depresses the one-page back key four times to reach the intended page.

As described above, the display device, which includes the five-page skip key, the five-page back key, the one-page skip key, and the one-page back key, does not allows a user to turn pages as the user actually reads a paper book.

In the embodiment, the display device 100 includes the two-page back key 21, the one-page skip key 22, and the five-page skip key 23. However, instead of these keys, a three-page back key for moving a displayed page backward by three pages, a one-page skip key for moving forward by one page, and a six-page skip key for moving a displayed page forward by six pages may be provided.

If there are provided an *n*-page skip key (n is an arbitrary integer equal to or larger than 3), a one-page skip key, and an (*n*/2)-page back key (if *"n"* is an even number) or an {(*n*-1)/2}-page back key (if "n" is an odd number), the combination of these three keys provides the easiest way for a user to find an intended page, since the user can depress the keys for the least number of times on average to reach the intended page.

## Claims

1. A display device (100) with a display panel (10) capable of displaying data and switching a displayed page to another on a page basis, comprising:
an n-page forwarder (30, S111) for moving a displayed page forward by *n* pages (*n* is an integer equal to or larger than 3) when operated by a user;
a one-page forwarder (30, S110) for moving the displayed page forward by one page when operated by the user; and
a page backwarder (30, S105) for moving the displayed page backward either by *(n*/*2)* pages if n is an even number, or by {(*n*-1)/2} pages if n is an odd number, when operated by the user.

2. A display device (100) with a display panel (10) capable of displaying data and switching a displayed page to another on a page basis, comprising:
at least two page forwarders (30, S110, S111) for moving a displayed page forward by a preset number of pages when operated by a user; and
at least one page backwarder (30, S105) for moving a displayed page backward by a preset number of pages when operated by a user,
wherein at least one of the page backwarders (30, S105) is an intermediate-page backwarder (30, S105) having a preset number of pages, the number being different from either numbers set in the page forwarders (30, S110, S111);
at least one of the page forwarders (30, S110, S111) is a large-page forwarder (30, S111) having a preset number of pages, the number being equal to or larger than the number of pages set in the intermediate-page backwarder (30, S105); and
at least one of the page forwarders (30, S110, S111) is a small-page forwarder (30, S110) having a preset number of pages, the number being equal to or smaller than the number of pages set in the intermediate-page backwarder (30, S105).

3. The display device (100) according to claim 2,
wherein the number of pages set in the intermediate-page backwarder (30, S105) is equal to or smaller than a number, the number being a half of the sum of the numbers of pages set in the large-page forwarder (30, S111) and the small-page forwarder (30, S110).

4. The display device (100) according to claim 3,
wherein n page is set in the large-page forwarder (30, S111), n being an integer equal to or larger than 3;
one page is set in the small-page forwarder (30, S110); and
either (n/2) page if *n* is an even number, or {(*n*-1)/2} page if n is an odd number, is set in the intermediate-page backwarder (30, S105).

5. The display device (100) according to any one of claims 2 through 4,
wherein a number of the page backwarders (30, S105) is smaller than a number of the page forwarders (30, S110, S111).

6. The display device (100) according to claim 5,
wherein the number of the page forwarders (30, S110, S111) is two and the number of the page backwarders (30, S105) is one.

7. The display device (100) according to any one of claims 1 through 2,
wherein the display panel (10) for displaying images comprises an electrophoretic display medium having first and second substrates disposed in opposition to each other and a dispersion medium with dispersed charged particles interposed therebetween.

8. A recording medium storing a display program (40) readable by a computer of a display device (100) capable of displaying data and switching a displayed page to another on a page basis, the display program (40) comprising:
instructing an *n*-page forwarder (30, S111) to move a displayed page forward by n pages (n is an integer equal to or larger than 3), when enabled by a user's operation;
instructing a one-page forwarder (30, S110) to move a displayed page forward by one page when enabled by a user's operation; and
instructing a page backwarder (30, S105) to move a displayed page backward either by (*n*/*2)* pages if *n* is an even number, or by {(*n*-1)/2} pages if *n* is an odd number, when enabled by the user's operation.

9. A recording medium storing a display program (40) readable by a computer of a display device (100) capable of displaying data and switching a displayed page to another on a page basis, a display program (40) comprising:
instructing at least two page forwarders (30, S110, S111) to move a displayed page forward by a preset number of pages when enabled by the user's operation; and
instructing at least one page backwarder (30, S105) to move a displayed page backward by a preset number of pages when enabled by the user's operation,
wherein at least one of the page backwarders (30, S105) is an intermediate-page backwarder (30, S105) having a preset number of pages, the number being different from either number set in the page forwarders (30, S110, S111);
at least one of the page forwarders (30, S110, S111) is a large-page forwarder (30, S111) having a preset number of pages, the number being equal to or larger than the number of pages set in the intermediate-page backwarder (30, S105); and
at least one of the page forwarders (30, S110, S111) is a small-page forwarder (30, S110) having a preset number of pages, the number being equal to or smaller than the number of pages set in the intermediate-page backwarder (30, S105).
